Europäisches Patentamt

European Patent Office

Office européen des brevets

(19)

(11) **EP 0 927 872 B1**

(12) **FASCICULE DE BREVET EUROPEEN**

(45) Date de publication et mention
de la délivrance du brevet:
**02.07.2003 Bulletin 2003/27**

(51) Int Cl.[7]: **G01D 5/14**, G01D 5/16

(21) Numéro de dépôt: **98403147.6**

(22) Date de dépôt: **14.12.1998**

(54) **Capteurs de position et de vitesse d'un arbre en rotation**

Geschwindigkeits- und Positionsgeber für rotierende Wellen

Speed and position sensors for rotating shafts

(84) Etats contractants désignés:
**DE ES FR IT**

(30) Priorité: **31.12.1997 FR 9716783**

(43) Date de publication de la demande:
**07.07.1999 Bulletin 1999/27**

(73) Titulaire: **SNR ROULEMENTS**
**F-74010 Annecy (FR)**

(72) Inventeur: **Peilloud, Fernand**
**75116 Paris (FR)**

(74) Mandataire: **Ballot, Paul**
**Cabinet Ballot**
**122, rue Edouard Vaillant**
**92593 Levallois-Perret Cedex (FR)**

(56) Documents cités:
**EP-A- 0 431 976**     **DE-U- 9 420 147**
**FR-A- 2 271 544**

EP 0 927 872 B1

**Description**

La présente invention est relative à un dispositif de mesure de position relative et de vitesse d'un arbre mobile en rotation, composé d'un codeur magnétique annulaire, à aimantation multipolaire, solidaire et concentrique de l'arbre, et d'un capteur à au moins deux éléments sensibles distincts, à effet Hall ou à magnétoristance, lié à un bâti fixe. L'originalité de l'invention est plus particulièrement relative à de nouvelles conceptions des codeurs multipolaires qui permettent de simplifier l'assemblage final des dispositifs de mesure et d'utiliser un capteur de type unique face à des codeurs à caractéristiques de magnétisation différentes.

Il est connu de mesurer la vitesse ou la position d'un mobile à l'aide d'un capteur à deux éléments sensibles disposés en face d'un codeur magnétique multipolaire. Généralement, on règle la position géométrique des deux éléments sensibles pour que leurs centres soient en quadrature dans le champ magnétique alternatif ou sinusoïdal de l'aimant. Cette situation est obtenue lorsque la distance entre les centres des éléments sensibles correspond à un nombre impair de quart de période magnétique du codeur. Les signaux électriques issus des éléments sensibles sont alors en quadrature de phase.

Lorsque, sur un dispositif non géométriquement réglé, les signaux issus des éléments sensibles sont de forme sinusoïdale, il est également connu de pouvoir les régler en quadrature par un traitement de signal électronique approprié.

Dans le cas d'une mesure en rotation, une disposition consiste à monter de façon concentrique et solidaire à l'arbre tournant, un codeur en forme de disque annulaire, aimanté sur l'une de ses faces. Les transitions magnétiques définies entre les secteurs de polarité Nord et les secteurs de polarité Sud sont généralement portés par des rayons du disque ou de l'anneau codeur. L'aimant multipolaire est de ce fait constitué d'un nombre égal à 2m secteurs circulaires ou pôles d'angle $\pi/m$, de polarités alternativement opposées, qui déterminent m périodes sectorielles de $2\pi/m$ de valeur angulaire.

Le réglage géométrique en quadrature dans le champ magnétique des éléments sensibles du capteur nécessite que la relation dimensionnelle suivante soit vérifiée:

$$d = 2R * \sin[(2n+1) * \pi/4m]$$

dans laquelle : d est la distance séparant les centres des éléments sensibles du capteur,
R est le rayon de lecture du codeur où sont placés les éléments sensibles, et
n un nombre entier négatif, nul ou positif qui permet de fixer les états de quadrature.

Cette égalité exprime qu'à un état de quadrature donné, soit un quart, trois quarts ou cinq quarts de période par exemple, et pour un nombre de périodes m du codeur magnétique choisi, il existe une relation univoque entre la distance d et le rayon de lecture R.

Le premier problème résultant de cette disposition vient de ce qu'à chaque nouvelle conception d'un dispositif de mesure modifiant, soit le nombre de périodes du codeur, soit la position du capteur sur le rayon de lecture R, il est nécessaire de créer un nouveau capteur à deux éléments sensibles convenablement espacés pour assurer l'état de quadrature, ce qui augmente les coûts de fabrication. Les technologies de fabrication adaptées sont de préférence celles qui mettent en oeuvre des procédés par reports d'éléments sensibles en composants discrets sur un support, dont les précisions de placement sont insuffisantes et ne permettent pas de s'affranchir de l'obligation d'un réglage en fin d'assemblage de chaque dispositif de mesure construit.

Un autre problème résultant de cette disposition vient de ce que la fonction de bâti servant de support du capteur, est généralement assurée par des pièces de faible précision d'exécution, ce qui entraîne une imprécision de position du capteur sur le rayon de lecture du codeur et donc une imprécision de l'état de quadrature des signaux, si un réglage de chaque dispositif de mesure n'est pas réalisé lors de l'assemblage final.

Le but de la présente invention est de pallier ces inconvénients en proposant un nouveau dispositif de mesure de vitesse de rotation et de position, qui comprend d'une part un capteur portant deux éléments, sensibles à effet Hall ou à magnétorésistance, à écartement précis prédéterminé, lié à un bâti fixe et d'autre part un codeur multipolaire, solidaire de la partie tournante et centré sur l'axe de rotation, réalisé de telle façon que les éléments sensibles du capteur présentent toujours le même déphasage relatif dans le champ magnétique du codeur, lorsque ledit capteur est déplacé selon un axe passant par les centres des éléments sensibles.

Pour cela l'objet de l'invention est un dispositif de mesure de position et de vitesse d'un arbre mobile en rotation, constitué par un capteur fixe portant au moins deux éléments sensibles délivrant des signaux sinusoïdaux de déphasage $\Gamma$ et monté à entrefer constant en regard de la face magnétisée d'un codeur multipolaire annulaire, centré sur l'arbre et solidaire en rotation, caractérisé en ce que l'axe $\delta_c$ du capteur porte les centres des deux éléments sensibles et est situé à une distance $R_o$ de l'axe $\delta_R$ de rotation du codeur magnétique, et en ce que le codeur porte sur sa face magnétisée 2m transitions magnétiques entre pôles de polarités opposées Nord et Sud, obtenues par rotations successives d'angle π/m autour du centre du codeur à partir d'une première transition de forme spirale dont le tracé en coordonnées polaires (μ, θ) est défini par l'un ou l'autre des systèmes d'équations :

$$\left(\begin{array}{l} \mu = (R_O{}^2 + a^2\Omega^2)^{\frac{1}{2}} \\ \\ \theta = (\text{arctg } \dfrac{a\Omega}{R_O}) + \Omega \end{array}\right.$$

ou

$$\left(\begin{array}{l} \mu = (R_O{}^2 + a^2\Omega^2)^{\frac{1}{2}} \\ \\ \theta = (\text{arctg } \dfrac{a\Omega}{R_O}) - \Omega \end{array}\right.$$

et le tracé des (2m-1) autres transitions spirales est obtenu par des rotations successives d'angle π/m de cette première transition autour du centre du codeur, équations dans lesquelles :

Ω est un angle de rotation du codeur autour de son centre,
μ est le module de la spirale mesuré à partir du centre du codeur,
θ est l'argument de la spirale dont l'origine est l'axe Oz portant la distance d'entraxe $R_o$,
et a est un paramètre d'excentration de la spirale défini par la relation :

$$a = d * m * 1/\Gamma$$

où

$\Gamma$ représente l'angle de déphasage entre les deux signaux issus des deux éléments sensibles du capteur,
d représente la distance entre les centres des éléments sensibles du capteur,
et m est le nombre de périodes magnétiques du codeur.

L'invention concerne également les conditions d'utilisation d'un même capteur face à des codeurs de différentes dimensions ou qui présentent un nombre différent de périodes magnétiques. Ce caractère d'universalité donne la possibilité au fabricant de réaliser le capteur en circuit intégré par des technologies micro-électroniques connues, pouvant éventuellement, en vue d'une miniaturisation, conduire à resserrer les éléments sensibles à une valeur inférieure à celle qui correspond au placement en quadrature du capteur dans le champ magnétique du codeur puis d'orthogonaliser les signaux issus des éléments sensibles par des moyens électroniques simples connus ; l'écart à la quadrature exacte étant de valeur constante, la correction électronique reste constante pour tous les codeurs réalisés et utilisés dans les conditions de l'invention.

L'invention concerne également plusieurs variantes de réalisation de codeurs multipolaires circulaires ou annulaires, dont la longueur de période magnétique, mesurée le long d'un axe préalablement défini, est constante, quel que soit le nombre de périodes de la division magnétique par tour de codeur et quelles que soient les dimensions dudit codeur.

D'autres caractéristiques et avantages de l'invention apparaîtront à la lecture de la description de plusieurs exemples de réalisation d'un dispositif de mesure selon l'invention, illustrée par les figures suivantes qui sont :

- la figure 1 : un dispositif de mesure comprenant un capteur et un codeur magnétique selon l'art antérieur ;
- la figure 2 : un dispositif de mesure de la position et de la vitesse selon l'invention ;
- les figures $3_a$ et $3_b$ : deux exemples de tracés d'une transition magnétique d'un codeur selon l'invention ;
- les figures 4 à 9 : différents modes de réalisation d'un codeur magnétique selon l'invention ;
- les figures 10 et 11 : deux modes de réalisation simplifiée d'un codeur magnétique selon l'invention.

Les éléments portant les mêmes références dans les différentes figures remplissent les mêmes fonctions en vue des mêmes résultats.

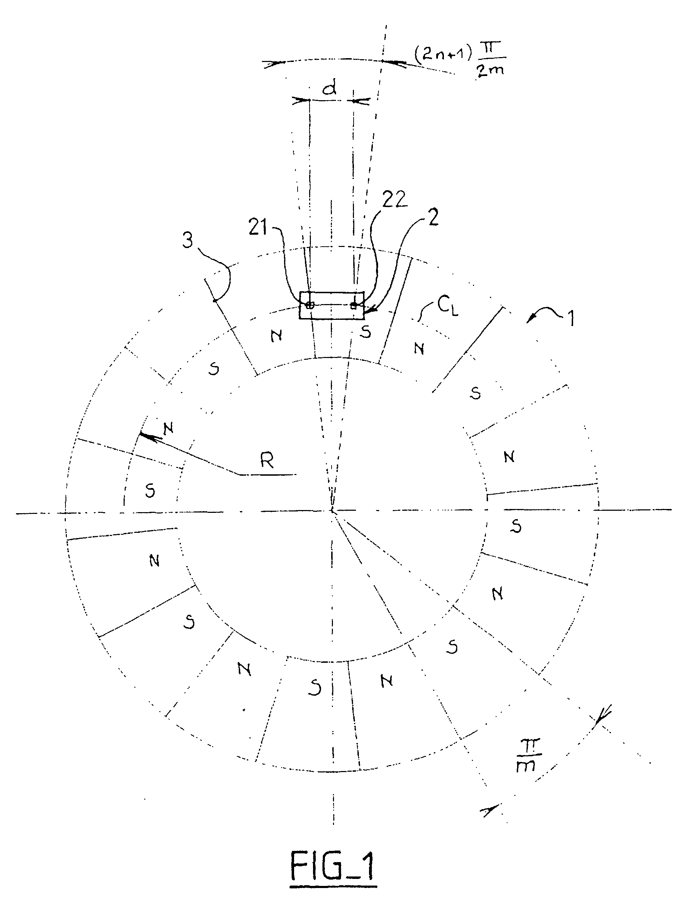

La figure 1 représente un dispositif de mesure comprenant un codeur circulaire de forme annulaire 1, selon l'art antérieur, comportant m périodes magnétiques Nord-Sud, solidaire concentriquement à un arbre tournant non représenté face à un capteur 2 comportant deux éléments sensibles 21 et 22 dont les centres sont distants d'une valeur d.

Les 2m transitions magnétiques 3 entre les pôles Nord et Sud, portées par des rayons du codeur, déterminent 2m secteurs annulaires de valeur angulaire $\pi/m$. Les deux éléments sensibles du capteur 21 et 22, tous deux situés sur un même cercle $C_L$ de rayon de lecture R, sont en quadrature géométrique dans le champ magnétique du codeur si la relation suivante est vérifiée:

$$d = 2R * \sin[(2n+1) * \pi/4m]$$

n étant un nombre entier négatif, nul ou positif.

De sorte que, pour un codeur présentant 2m pôles magnétiques, la distance d peut prendre au plus m valeurs distinctes pour un rayon R de lecture donné.

Hors de ces valeurs, tout écart par rapport aux valeurs de d et de R fixées par le concepteur selon cette relation entraîné des écarts de quadrature donc nécessite un réglage de celle-ci après assemblage du dispositif. De plus, la conception d'un nouveau dispositif comportant un codeur à nombre différent de pôles magnétiques conduit généralement à concevoir également un nouveau capteur présentant une distance d adaptée.

Les conclusions à porter sont identiques lorsque les deux éléments sensibles sont réglés sur des rayons de lecture différents.

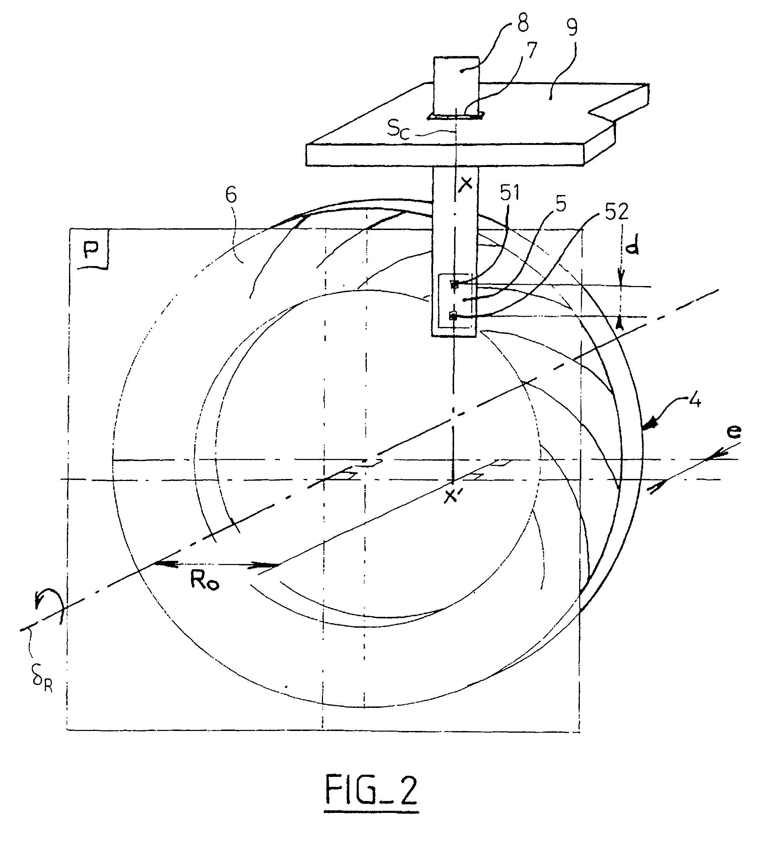

La figure 2 représente un dispositif de mesure selon l'invention, comprenant un capteur 5, réalisé en circuit intégré par des moyens micro-électroniques par exemple, qui possède deux éléments 51 et 52 sensibles au champ magnétique, dont la distance d entre leurs centres est fixée à une valeur unique et constante et dont la position de l'axe joignant lesdits centres est connue. Il comprend de plus un codeur magnétique 4 concentrique et solidaire de l'arbre mobile en rotation, non représenté, et d'axe de rotation $\delta_R$. Le capteur 5 est monté dans un plan P parallèle à la face magnétisée 6 du codeur 4, pour que les éléments sensibles 51 et 52 soient en regard du motif magnétique du codeur à une distance d'entrefer e. L'axe $\delta_c$ des centres des éléments sensibles appartenant à ce plan P est situé à une distance $R_0$ de l'axe de rotation $\delta_R$ du dispositif. Un guidage prismatique 7, ménagé entre un porte-capteur 8 et un bâti fixe 9, permet de matérialiser ce plan de montage du capteur et de maintenir constante la distance $R_0$ choisie lors de la conception du dispositif. L'axe $\delta_c$ est l'axe sur lequel le motif magnétique du codeur 4 est lu par chacun des éléments sensibles 51 et 52. La distance d entre les centres des deux éléments sensibles est choisie pour être compatible avec le mode de réalisation du capteur. Elle représente une portion de la dimension d'un pôle du codeur, préférentiellement égale ou inférieure au quart de la période de l'aimant codeur, mesurée le long de l'axe des centres des éléments sensibles du dispositif assemblé. Il est possible de choisir pour la distance d des valeurs supérieures au quart de la période sans sortir du cadre de l'invention.

L'axe $\delta_c$ est l'axe sur lequel le motif magnétique du codeur 4 est lu par chacun des éléments sensibles 51 et 52. Selon l'invention, l'écartement d étant choisi, la situation de quadrature ou une situation de déphasage de valeur constante est obtenue quelle que soit la position du porte-capteur 8 se déplaçant sur l'axe $\delta_c$ à condition que les éléments sensibles 51 et 52 restent tous les deux en regard du motif magnétique du codeur 4.

Le codeur 4 annulaire, réalisé en un des matériaux constitutifs des aimants permanents connus de l'homme de l'art, est magnétisé sur l'une de ses faces 6, selon une succession à défilement en rotation de motifs magnétiques Nord et Sud constituant m périodes magnétiques. Selon une caractéristique fondamentale de l'invention, une des transitions magnétiques séparant deux pôles de polarités opposées est représentée par l'un ou l'autre des systèmes d'équations en coordonnées polaires $(\mu, \theta)$ :

$$\begin{cases} \mu = [R_0{}^2 + a^2\Omega^2]^{\frac{1}{2}} \\ \theta = (\text{arctg } \dfrac{a\Omega}{R_0}) + \Omega \end{cases}$$

ou

$$\mu = [R_O{}^2 + a^2\Omega^2]^{\frac{1}{2}}$$

$$\theta = (\text{arctg } \frac{a\Omega}{R_O}) - \Omega$$

L'ensemble des transitions magnétiques du codeur est défini par 2m rotations successives d'angle $\pi/m$ de la première transition magnétique par rapport au centre du codeur donnant 2m transitions ou m périodes magnétiques.

Ces deux systèmes d'équations permettent de définir deux familles de spirales où :

- $R_o$ est un paramètre de construction du dispositif tel que défini précédemment,
- $\Omega$ est l'angle courant de rotation du codeur mesuré en son centre,
- a est une constante choisie en fonction de la distance d des centres des éléments sensibles du capteur et du nombre de périodes magnétiques choisies pour le codeur.

$R_o$, a et $\Omega$ permettent de définir, pour chacune des valeurs de $\Omega$, la position de la transition exprimée en coordonnées polaires par rapport au centre du codeur par son module $\mu$ et sa phase $\theta$ d'origine concordante à l'origine de $\Omega$.

L'invention, ainsi que ses nombreux avantages seront mieux compris en se référant à la description détaillée suivante et aux dessins annexés.

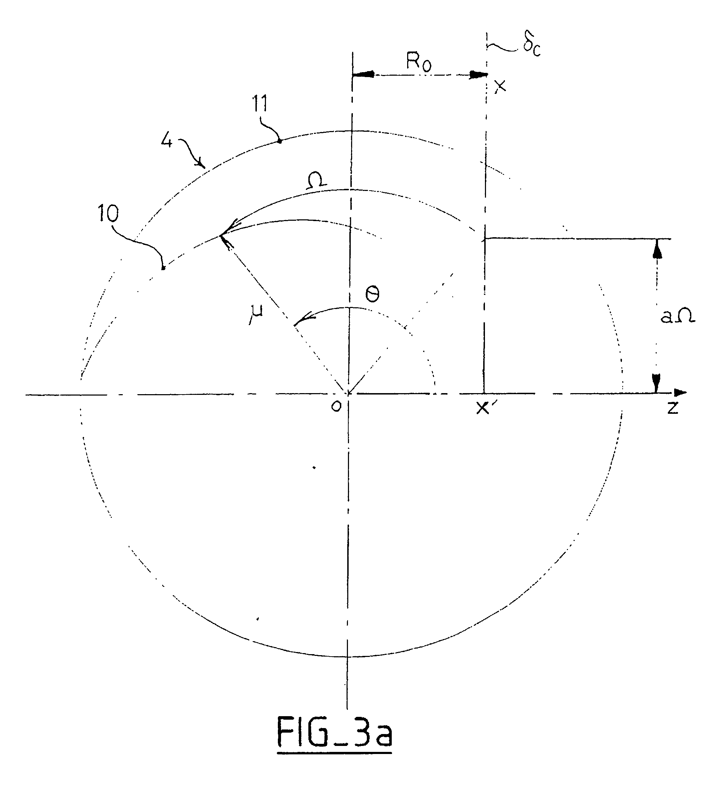

La figure 3a représente le tracé selon l'invention d'une transition magnétique 10 entre deux pôles Nord et Sud sur un codeur 4 de centre O. L'axe $\delta_c$ situé à une distance $R_o$ du centre O coupe l'axe Oz, sur lequel est mesurée la distance $R_o$ au point X'. Le point X' de l'axe Oz est l'origine de la transition magnétique 10 en forme de spirale, qui s'étend jusqu'à la limite extérieure du codeur.

Un point de la transition 10 est défini par ses coordonnées polaires ($\mu$, $\theta$) qui sont d'une part le module $\mu$ et d'autre part l'angle $\theta$ de l'origine Oz de la phase définis par les relations suivantes :

$$\mu = [R_O{}^2 + a^2\Omega^2]^{\frac{1}{2}}$$

$$\theta = (\text{arctg } \frac{a\Omega}{R_O}) + \Omega,$$

dans lesquelles, la grandeur $a\Omega$ est portée par l'axe $\delta_c$ à partir de l'origine X', a est une constante calculée en fonction de la distance d entre les centres sensibles du capteur et du nombre de périodes magnétiques du codeur, $\Omega$ est l'angle de rotation en sens direct autour du centre O du codeur 4 qui génère, à partir du point sur l'axe $\delta_c$ d'ordonnée $a\Omega$, le point correspondant de la transition 10 déphasé de l'angle $\theta$ par rapport à l'origine.

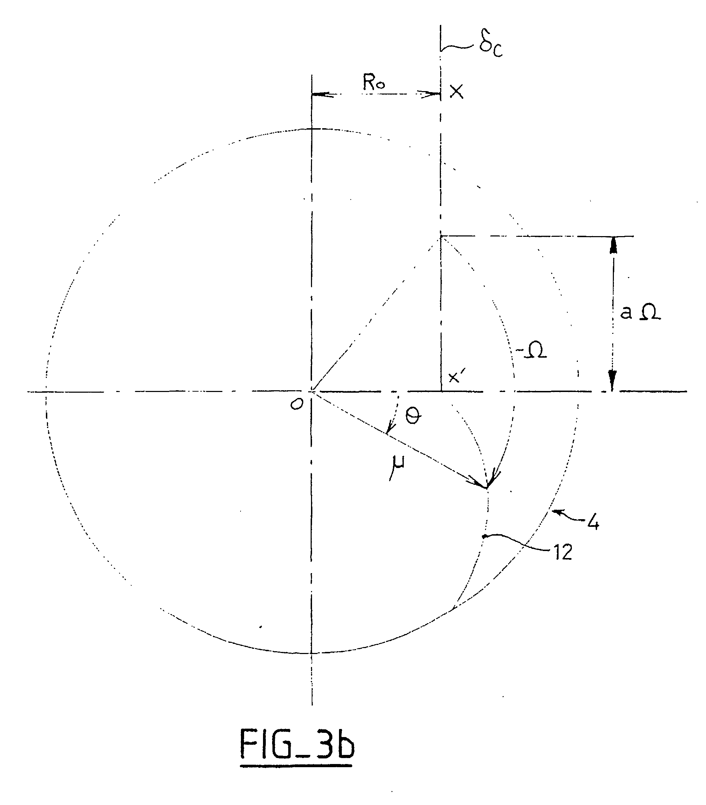

La figure 3b représente le tracé selon l'invention d'une transition magnétique 12 entre deux pôles Nord et Sud sur un codeur 4 répondant aux relations en coordonnées polaires ($\mu$, $\theta$) suivantes :

$$\mu = [R_O{}^2 + a^2\Omega^2]^{\frac{1}{2}}$$

$$\theta = (\text{arctg } \frac{a\Omega}{R_O}) - \Omega,$$

avec une rotation de sens inverse d'angle $-\Omega$ du point d'ordonnée $a\Omega$ appartenant à l'axe $\delta_c$, pour générer le point correspondant de la transition 12.

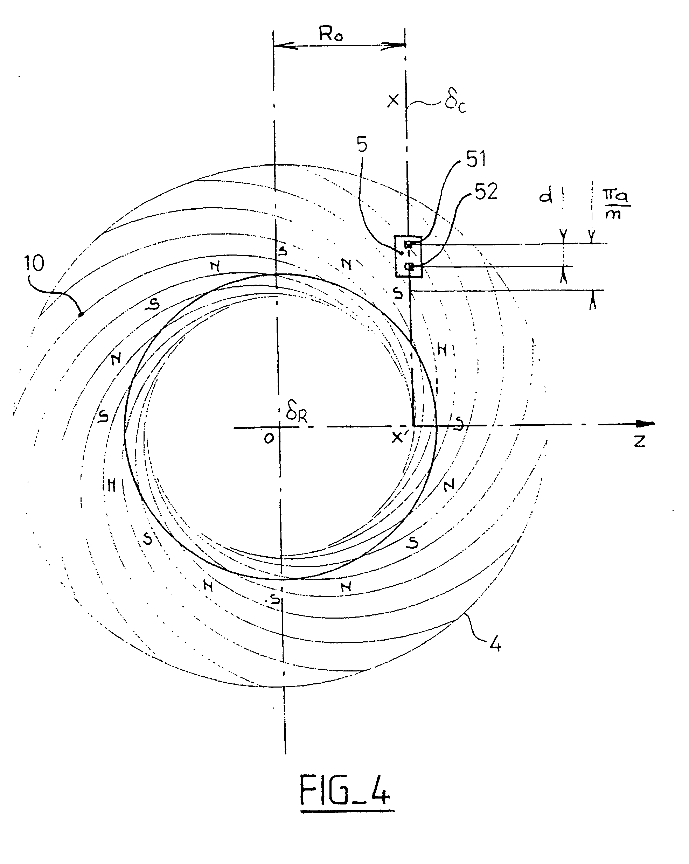

La figure 4 représente un premier mode de réalisation d'un codeur magnétique selon l'invention, pour lequel le tracé de toutes les transitions entre les pôles magnétiques Nord et Sud qui sont obtenues par des rotations, autour du centre O du codeur, de la transition 10 telle que décrite en figure 3a. Chaque transition se déduit de la transition immédiatement consécutive par une rotation d'angle $\pi/m$.

La succession de ces transitions 10 définit une succession de 2m pôles Nord ou Sud de l'aimant codeur 4. L'axe $\delta_c$ d'origine X' située sur l'axe Oz, à une distance $R_o$ du centre O du codeur 4, intercepte la succession de transitions 10 selon un pas constant égal à $\pi a/m$, alors que le pas circonférentiel est par construction égal à $\pi/m$.

Le capteur 5 est placé de telle façon que les centres des éléments sensibles 51 et 52, distants de d, soient sur l'axe $\delta_c$.

Quelle que soit la position du capteur 5 sur l'axe $\delta_c$, les signaux issus des éléments sensibles 51 et 52 restent en déphasage constant, dont la valeur est uniquement fonction de la valeur relative de la distance d, choisie comme distance séparant les centres des éléments sensibles du capteur, à la valeur du pas $\pi a/m$ du codeur mesurée sur l'axe $\delta_c$. Ce déphasage des signaux issus des éléments 51 et 52 reste également constant lorsque le codeur tourne autour de son axe O.

A titre d'exemple non limitatif, il est possible de choisir une distance d qui permet d'obtenir des signaux, issus des éléments sensibles 51 et 52, en quadrature de phase, selon la relation :

$$d = \frac{\pi a}{2m}$$

On peut également choisir, toujours à titre d'exemple non limitatif, une valeur de d plus faible, correspondant à un déphasage des signaux inférieur à la quadrature de phase, pour permettre une miniaturisation du capteur tout en gardant l'avantage d'un déphasage constant, quelle que soit la position du capteur 5 sur l'axe $\delta_c$ avec ou sans rotation du codeur.

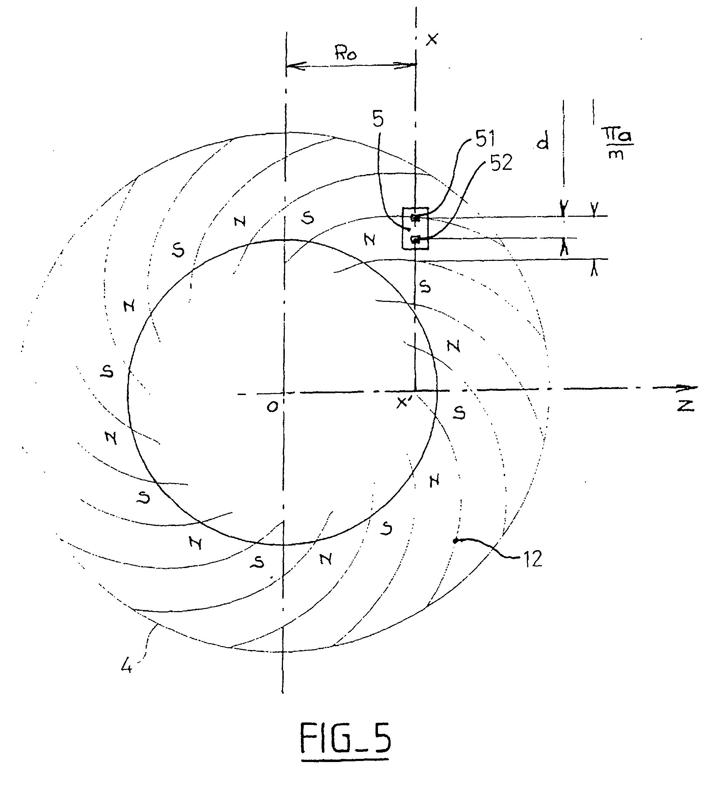

La figure 5 représente un deuxième mode de réalisation d'un codeur magnétique selon l'invention, pour lequel le tracé de toutes les transitions magnétiques entre les pôles obtenues par des rotations, autour du centre O du codeur, de la transition 12 telle que décrite en figure 3b. Chaque transition se déduit de la transition voisine par une rotation d'angle $\pi/m$. La succession de ces transitions définit une succession de m périodes ou 2m pôles Nord ou Sud de l'aimant codeur. L'axe $\delta_c$ d'origine X' située sur l'axe Oz, à une distance $R_o$ du centre O du codeur 4, intercepte la succession de transitions selon un pas constant égal à $\pi a/m$, alors que le pas circonférenciel est par construction égal à $\pi/m$.

Les caractéristiques attendues pour un capteur 5, dont les centres des éléments sensibles sont situés sur l'axe $\delta_c$ sont identiques à celles décrites en figure 4.

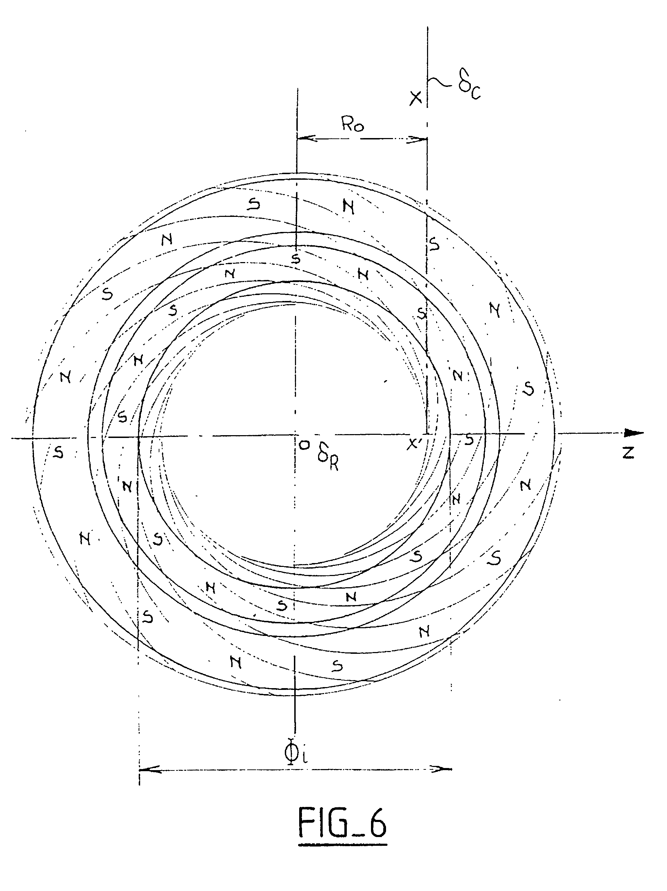

La figure 6 montre qu'à partir du tracé de la figure 4, il est possible de réaliser une infinité de codeurs annulaires de diamètres et/ou de largeur différents présentant les avantages précédemment décrits. Les deux conditions à réaliser sont tout d'abord que le diamètre intérieur $\Phi_i$ du codeur choisi ne soit pas inférieur au double de la distance $R_o$ entre les deux axes $\delta_c$ et $\delta_R$ et d'autre part que les centres des éléments sensibles du capteur soient situés sur l'axe $\delta_c$ tous deux face au codeur. Il n'y a pas de limitation concernant le diamètre extérieur, les transitions spirales peuvent être prolongées au delà du tracé, nécessairement limité, de la présente figure sans perdre les avantages de l'invention.

Il est également possible à partir de la figure 5 de réaliser une infinité de codeurs annulaires répondant à l'invention.

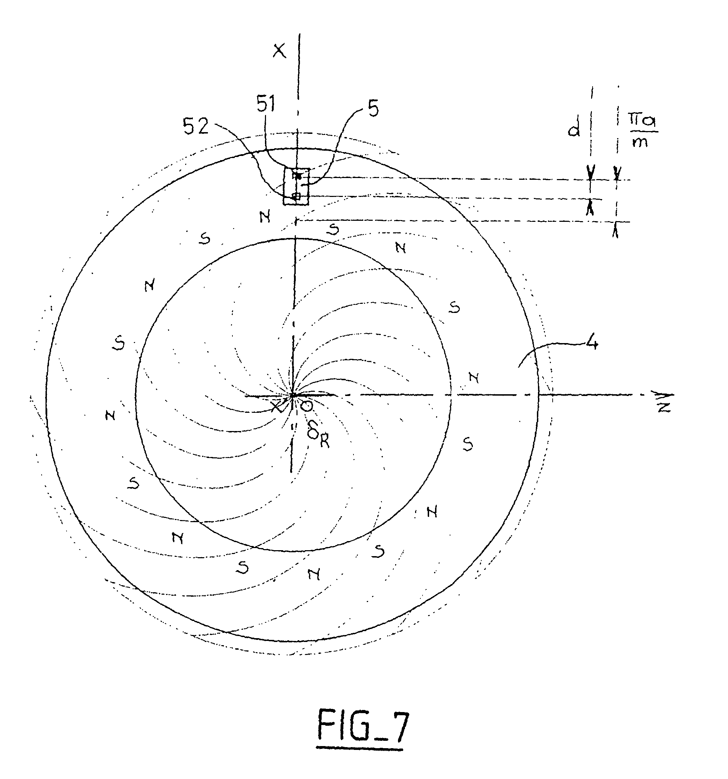

La figure 7 représente un autre exemple non limitatif de codeur multipolaire 4 dont les transitions magnétiques en spirales sont définies selon l'une des relations $\mu$ et $\theta$ précédentes, avec la distance $R_o$ nulle. L'axe $\delta_c$ sur lequel sont situés les centres des éléments sensibles du capteur passe par le centre O du codeur et intercepte la succession des transitions selon un pas constant égal à $\pi a/m$, alors que le pas circonférenciel est par construction égal à $\pi/m$.

Les deux éléments sensibles 51 et 52, distants de d, du capteur 5 fonctionnent donc dans la même situation de déphasage de signaux que pour les exemples précédents.

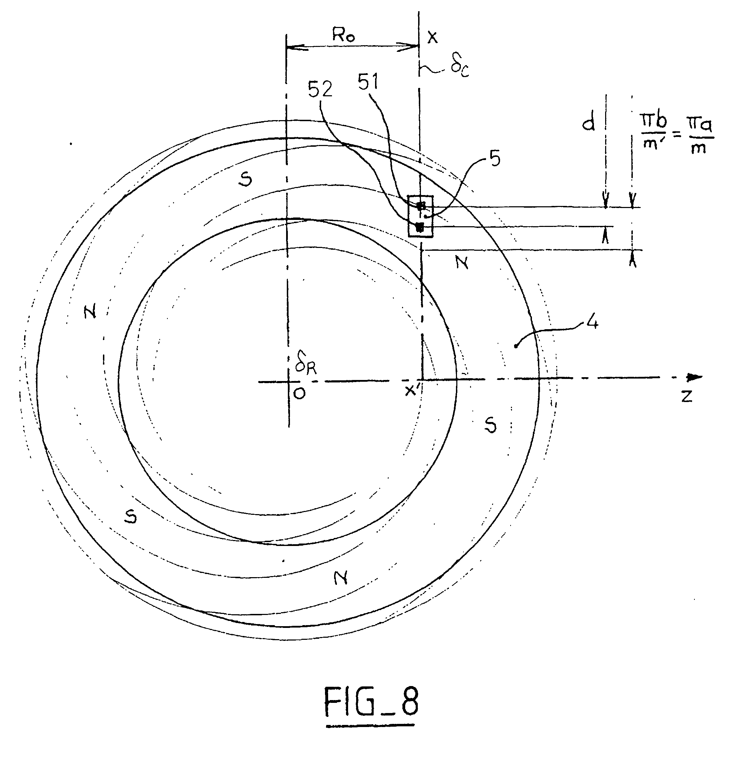

La figure 8 représente un autre exemple non limitatif de réalisation d'un codeur multipolaire annulaire 4 dont les transitions magnétiques ont été générées par les coordonnées polaires entre les pôles Nord et Sud :

$$\begin{aligned}
&\mu = [R_o{}^2 + b^2\Omega^2]^{\frac{1}{2}} \\
&\theta = \left(\text{arctg}\ \frac{b\Omega}{R_o}\right) - \Omega
\end{aligned}$$

et des rotations successives d'angles $\pi/m'$, b étant une constante de la spirale différente de a et m' étant le nombre de périodes différent de m mais liés par la relation: $b/m' = a/m$.

L'axe $\delta_c$ d'origine X' située sur l'axe Oz à une distance $R_o$ du centre du codeur 4 passant par les centres des éléments sensibles 51 et 52 et du capteur 5 intercepte la succession de transitions selon un pas constant égal à $\pi b/m' = \pi a/m$, alors que le pas circonférenciel est par construction égal à $\pi/m'$.

Le capteur 5, constitué de deux éléments sensibles 51 et 52 dont les centres distants de d sont portés par l'axe $\delta_c$ fonctionne donc dans la même situation de déphasage des signaux que pour les exemples précédents, alors que le nombre de transitions ou le nombre de périodes magnétiques du codeur sont différents.

Les conclusions sont identiques avec n'importe quel codeur obtenu à partir de l'un quelconque des systèmes d'équations $\mu$, $\theta$.

Les exemples non limitatifs présentés en figures 4, 5, 6, 7 et 8 montrent une caractéristique essentielle de l'invention, selon laquelle un capteur unique constitué de deux éléments sensibles, dont les centres sont distants d'une valeur d, permet de construire tout dispositif capteur lorsqu'il est associé à des codeurs annulaires dont la face magnétisée montre une alternance de 2m pôles Nord et Sud à défilement circonférentiel, soit m périodes magnétiques, à condition que les transitions entre les pôles répondent, en coordonnées polaires, à l'un ou l'autre des systèmes d'équations suivants :

$$\mu = [R_O^2 + a^2\Omega^2]^{\frac{1}{2}}$$
$$\theta = \left(\text{arctg } \frac{a\Omega}{R_O}\right) + \Omega$$

ou bien :

$$\mu = [R_O^2 + a^2\Omega^2]^{\frac{1}{2}}$$
$$\theta = \left(\text{arctg } \frac{a\Omega}{R_O}\right) - \Omega$$

et que chacune des transitions d'un codeur soit déduite de la transition immédiatement consécutive par une rotation d'angle $\pi/m$ par rapport au centre du codeur.

Ainsi, le demi axe $\delta_c$ d'origine X' correspondant à son intersection en projection faciale avec l'axe Oz qui est l'origine des phases, situé à une distance $R_O$ du centre du codeur, porte les centres des deux éléments sensibles du capteur en une position quelconque en regard du codeur dont le diamètre intérieur est au moins égal à $2\,R_O$. La valeur de $R_O$ qui dépend du choix du concepteur peut prendre toute valeur à partir de la valeur nulle.

Le paramètre de spirale a est défini, pour chaque nouvelle conception de codeur, par rapport à la distance d des centres des éléments sensibles du capteur et du nombre de périodes magnétiques m portées par le codeur, par la relation suivante:

$$a = \frac{2d^*m}{\pi}$$

pour que les deux signaux de sortie des éléments sensibles du capteur soient en quadrature de phase.

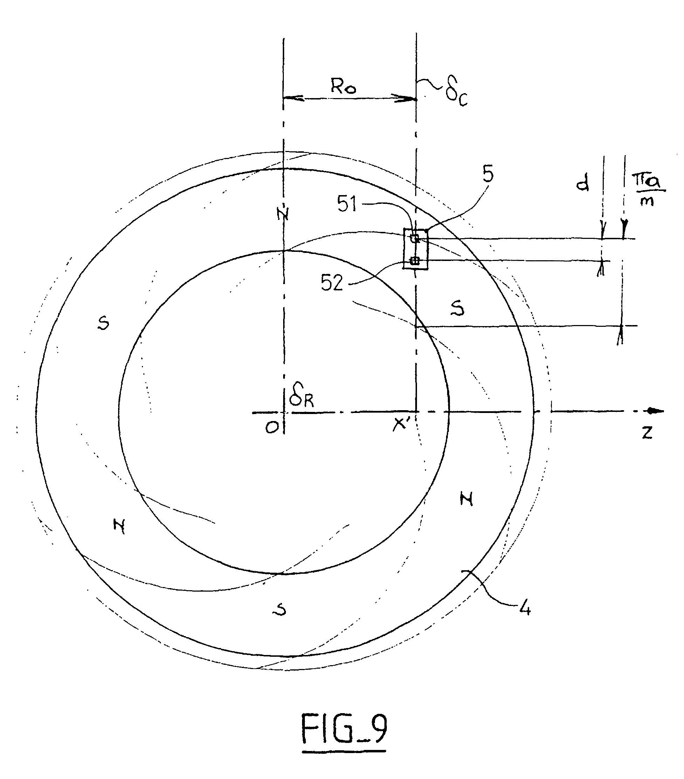

La figure 9 présente une autre conception du dispositif de mesure où le déphasage des signaux de sortie des éléments sensibles 51 et 52 du capteur 5 est différent de la quadrature. Ce choix peut être opéré par exemple pour permettre une simplification de la réalisation du codeur 4 ou une miniaturisation plus importante du capteur 5, en diminuant la distance d des centres des éléments sensibles 51 et 52. La valeur du déphasage choisie peut être unifiée à toutes les conceptions de dispositifs capteurs de vitesse, et il est alors possible de prévoir également un traitement unifié des signaux du capteur 5 et ainsi maintenir le bénéfice de l'existence d'un seul capteur 5 pour toutes les conceptions de dispositifs capteurs de vitesse ou de position.

Dans ces hypothèses, la constante a de la spirale représentant une transition magnétique entre deux pôles Nord et Sud, selon l'un ou l'autre des systèmes d'équations polaires, est donnée en fonction de la distance d entre les centres des éléments sensibles 51 et 52 du capteur 5 et du nombre m de périodes du codeur 4 par la relation :

$$a = d^*m^*1/\Gamma$$

où $\Gamma$ est l'angle de déphasage des deux signaux issus du capteur, exprimés en radians.

Pour des applications particulières des dispositifs capteurs de vitesse ou de position, il peut être admis une imprécision sur l'état de quadrature ou de déphasage des signaux issus des capteurs permettant des simplifications de réalisation des transitions magnétiques Nord-Sud de codeurs.

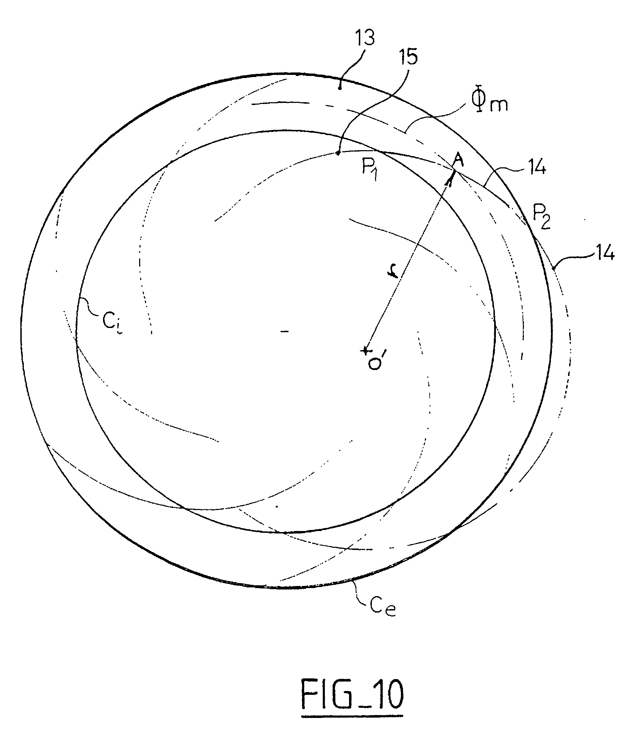

La figure 10 représente, pour un codeur annulaire 13 de faible largeur, une possibilité de simplification qui consiste à remplacer la transition magnétique entre deux pôles Nord et Sud en arc de spirale par une transition magnétique en arc de cercle 14 de rayon r, centrée sur le centre de courbure O' du point A de la spirale 15, situé au diamètre moyen $\Phi_m$ du codeur. Les moyens de calcul de ce rayon de courbure et de la position du centre de courbure sont connus.

Une autre possibilité est d'utiliser une transition en arc de cercle 14, en substitution à la transition spirale 15 pour sa partie comprise entre la circonférence intérieure $C_i$ et la circonférence extérieure $C_e$ du codeur, qui consiste à choisir l'arc de cercle le plus proche de l'axe de spirale par une méthode de minimisation de la moyenne des distances quadratiques des deux tracés.

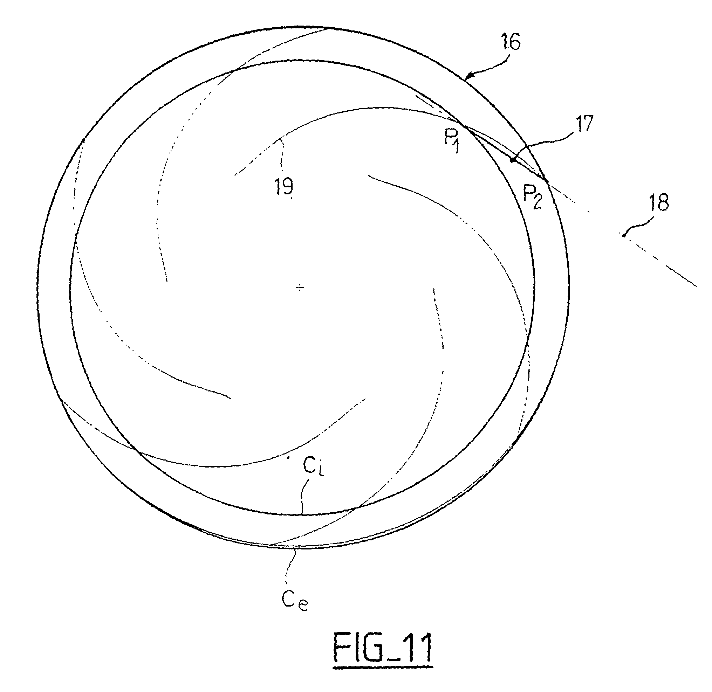

La figure 11 représente une autre possibilité de réalisation simplifiée d'un codeur annulaire 16 de faible largeur qui consiste à remplacer la transition magnétique entre deux pôles Nord et Sud 19 en arc de spirale par une transition magnétique linéaire 17. La droite 18 définissant la position de la transition magnétique 17 peut être soit tangente à la spirale à mi-rayon du codeur 16, soit sécante passant par les deux points $P_1$ et $P_2$ d'intersection de la spirale avec respectivement les circonférences intérieure $C_i$ et extérieure $C_e$ de l'anneau codeur 16. La droite 18 peut être également la sécante à l'arc de spirale dont la position minimise la moyenne des écarts quadratiques de distance entre la spirale et la droite sur la largeur de l'aimant annulaire.

Enfin, les positions de symétrie par rapport au centre du codeur ou à l'un quelconque des axes passant par ce centre, pour l'un quelconque des cas décrits précédemment, font partie de la présente invention.


**Revendications**

1. Dispositif de mesure de position et de vitesse d'un arbre mobile en rotation, constitué par un capteur fixe portant au moins deux éléments sensibles, à effet Hall ou à magnétorésistance, délivrant des signaux sinusoïdaux de déphasage $\Gamma$ et monté en entrefer constant en regard de la face magnétisée d'un codeur multipolaire annulaire, centré sur l'arbre et solidaire en rotation, **caractérisé en ce que** l'axe ($\delta_c$) du capteur (5) portant les centres des deux éléments sensibles (51 et 52) est situé à une distance ($R_o$) de l'axe ($\delta_R$) de rotation du codeur magnétique (4), et **en ce que** le codeur (4) porte sur sa face magnétisée (6) 2m transitions magnétiques entre pôles de polarités opposées Nord et Sud, en forme de spirales dont le tracé de la première transition est défini en coordonnées polaires ($\mu$, $\theta$) par les équations :

$$
\begin{aligned}
( \qquad\qquad \mu &= [R_O{}^2 + a^2\Omega^2]^{\frac{1}{2}} \\
( \\
( \qquad\qquad \theta &= (\text{arctg}\ \frac{a\Omega}{R_O}) + \Omega \\
(
\end{aligned}
$$

et le tracé des (2m - 1) autres transitions spirales est obtenu par des rotations successives d'angles $\pi/m$ de cette première transition autour du centre (O) du codeur,

équations dans lesquelles $\Omega$ est l'angle de rotation du codeur autour de son centre (O), $\mu$ est le module de la spirale mesuré à partir du centre (0) du codeur (4), ($\theta$) est l'argument de la spirale mesuré à partir de son origine l'axe (Oz) portant la distance d'entraxe ($R_o$) et a est un paramètre d'excentration de la spirale défini par la relation :

$$ a = d*m*1/\Gamma $$

dans laquelle $\Gamma$ représente l'angle de déphasage entre les deux signaux issus des deux éléments sensibles (51 et 52) du capteur (5), d représente la distance entre les centres des éléments sensibles du capteur et m le nombre de périodes magnétiques du codeur.

2. Dispositif de mesure de position et de vitesse d'un arbre mobile en rotation, constitué par un capteur fixe portant au moins deux éléments sensibles, à effet Hall ou à magnétorésistance, délivrant des signaux sinusoïdaux de déphasage $\Gamma$ et monté en entrefer constant en regard de la face magnétisée d'un codeur multipolaire annulaire, centré sur l'arbre et solidaire en rotation, **caractérisé en ce que** l'axe ($\delta_c$) du capteur (5) portant les centres des deux éléments sensibles (51 et 52) est situé à une distance ($R_0$) de l'axe ($\delta_R$) de rotation du codeur magnétique (4), et **en ce que** le codeur (4) porte sur face magnétique (6) 2m transitions magnétiques entre pôles de polarités opposées Nord et Sud, en forme de spirales dont le tracé de la première transition est défini en coordonnées polaires ($\mu$, $\theta$) par les équations :

$$\mu = [R_O{}^2 + a^2\Omega^2]^{\frac{1}{2}}$$

$$\theta = (arctg \frac{a\Omega}{R_O}) - \Omega$$

et le tracé des (2m-1) autres transitions par des rotations successives d'angle ($\pi/m$) de cette première transition autour du centre du codeur, équations dans lesquelles $\Omega$ est l'angle de rotation du codeur autour de son centre (C), $\mu$ le module de la spirale mesuré à partir du centre (O) du codeur, $\theta$ l'argument de la spirale mesuré au centre (O) dont l'origine est l'axe (Oz) portant la distance d'entraxe ($R_o$) et a un paramètre d'excentration de la spirale défini par la relation :

$$a = d*m*1/\Gamma$$

où $\Gamma$ représente l'angle de déphasage entre les deux éléments sensibles du capteur, d représente la distance entre les centres des éléments sensibles du capteur et m le nombre de périodes magnétiques du codeur.

**3.** Dispositif de mesure selon l'une des revendications 1 ou 2, **caractérisé en ce que** la distance ($R_o$) entre l'axe ($\delta_R$) de rotation du codeur (4) et l'axe ($\delta_C$) du capteur (5) est nulle.

**4.** Dispositif de mesure selon l'une des revendications 1, 2 ou 3, **caractérisé en ce que** l'angle de déphasage ($\Gamma$) entre les deux signaux issus des deux éléments sensibles (51) et (52) du capteur (5) a une valeur égale à un nombre impair de fois $\pi/2$, localisant les éléments sensibles du capteur en situation de quadrature dans le champ magnétique du codeur.

**5.** Dispositif de mesure selon l'une des revendications 1, 2 ou 3, **caractérisé en ce que** l'angle ($\Gamma$) de déphasage entre les deux signaux issus des éléments sensibles (51) et (52) du capteur (5) a une valeur inférieure à $\pi/2$ correspondant à une valeur faible de la distance (d) entre les éléments sensibles, et **en ce que** le capteur porte un moyen unique d'orthogonalisation électronique des signaux issus desdits éléments sensibles.

**6.** Dispositif de mesure selon l'une des revendications 1, 2 ou 3, **caractérisé en ce que** le diamètre intérieur ($\Phi_i$) du codeur annulaire (4) est supérieur au double de la distance d'entraxe ($R_o$).

**7.** Dispositif de mesure selon les revendications 1 à 6, **caractérisé en ce que** les transitions magnétiques portées par le codeur annulaire sont en arcs de cercles (14), dont les rayons et les positions des centres correspondent au rayon de courbure (r) et aux positions des centres de courbure (O') des points des spirales (15) situés au diamètre moyen ($\Phi_m$) du codeur magnétique annulaire (4).

**8.** Dispositif de mesure selon les revendications 1 à 6, **caractérisé en ce que** les transitions magnétiques portées par le codeur annulaire sont en arcs de cercles (14), dont les tracés sont obtenus par une méthode minimisant la moyenne des distances quadratiques entre le tracé en arc de cercle et le tracé en arc de spirale (15) pour chacune des transitions.

**9.** Dispositif de mesure selon les revendications 1 à 6, **caractérisé en ce que** les transitions magnétiques portées par des codeurs annulaires sont linéaires (17), dont les tracés correspondent aux tangentes (18) aux points des spirales situés au diamètre moyen ($\Phi_m$) du codeur magnétique annulaire.

**10.** Dispositif de mesure selon les revendications 1 à 6, **caractérisé en ce que** les transitions magnétiques portées par des codeurs annulaires sont linéaires (17), dont les tracés sont obtenus par une méthode minimisant la moyenne des distances quadratiques entre le tracé en arc de spirale (19) et la droite pour chacune des transitions.

**11.** Dispositif de mesure selon les revendications 1 à 6, **caractérisé en ce que** les transitions magnétiques portées par les codeurs magnétiques annulaires sont linéaires sécantes aux spirales, chaque transition linéaire passant par les deux points extrêmes ($P_1$ et $P_2$) de chaque transition spirale appartenant à la surface du codeur annulaire.

**12.** Dispositif de mesure de vitesse ou de position selon l'une des revendications 1, 2 ou 3, **caractérisé en ce que** l'axe du capteur portant le centre des éléments sensibles est maintenu en position connue dans le dispositif, quel que soit le moyen de liaison entre le capteur et le bâti fixe.

**Patentansprüche**

**1.** Vorrichtung zum Messen der Position und der Geschwindigkeit einer drehenden Welle mit einem feststehenden Aufnehmer, der mindestens zwei nach dem Hall-Effekt oder nach dem Prinzip der Magnetoresistenz arbeitende Sensorelemente hat, welche sinusförmige Signale mit Phasenversatz $\Gamma$ abgeben, wobei der Aufnehmer mit konstantem Spalt bezüglich der magnetisierten Seite eines ringförmigen, mehrpoligen Kodierers montiert ist, der auf der Welle zentriert und mit dieser drehfest ist, **dadurch gekennzeichnet, daß** die Achse ($\delta_c$) des Aufnehmers (5), welche die Zentren der beiden Sensorelemente (51, 52) enthält, in einem Abstand ($R_0$) von der Drehachse ($\delta_R$) des magnetischen Kodierers (4) gelegen ist und daß der Kodierer (4) auf seiner magnetisierten Seite (6) 2m magnetische Übergänge zwischen Polen entgegengesetzter Polarität Nord und Süd in Gestalt von Spiralen trägt, wobei der Kurvenverlauf des ersten Übergangs in Polarkoordinaten ($\mu$, $\theta$) durch die Gleichungen:

$$\mu = [R'_o{}^2 + a^2\Omega^2]^{\frac{1}{2}}$$

$$\theta = \left(\text{arctg } \frac{a\Omega}{R_o}\right) + \Omega$$

definiert ist und der Kurvenverlauf der übrigen (2m-1) spiraligen Übergänge durch sukzessives Verdrehen um den Winkel $\pi$/m dieses ersten Überganges um das Zentrum (O) des Kodierers erhalten wird,
wobei in den Gleichungen $\Omega$ der Drehwinkel des Kodierers um sein Zentrum (O), $\mu$ der Modul der Spirale, gemessen ausgehend von der Mitte (O) des Kodierers (4), $\theta$ das Argument der Spirale, gemessen ausgehend vom Ursprung in Richtung der Achse (Oz) überbrückend den Zwischenachsabstand ($R_0$) und a ein Exzentrizitäts-Parameter der Spirale, definiert durch die Beziehung:

$$a = d*m*1/\Gamma$$

ist, worin $\Gamma$ den Phasenversatzwinkel zwischen den beiden Ausgangssignalen der beiden Sensorelemente (51,52) des Aufnehmers (5), d den Abstand zwischen den Mitten der Sensorelemente des Aufnehmers und m die Anzahl der magnetischen Perioden des Kodierers bezeichnen.

**2.** Vorrichtung zum Messen der Position und der Geschwindigkeit einer drehenden Welle mit einem feststehenden Aufnehmer, der mindestens zwei nach dem Hall-Effekt oder nach dem Prinzip der Magnetoresistenz arbeitende Sensorelemente hat, welche sinusförmige Signale mit Phasenversatz $\Gamma$ abgeben, wobei der Aufnehmer mit konstantem Spalt bezüglich der magnetisierten Seite eines ringförmigen, mehrpoligen Kodierers montiert ist, der auf der Welle zentriert und mit dieser drehfest ist, **dadurch gekennzeichnet, daß** die Achse ($\delta_c$) des Aufnehmers (5), welche die Zentren der beiden Sensorelemente (51, 52) enthält, in einem Abstand ($R_0$) von der Drehachse ($\delta_R$) des magnetischen Kodierers (4) gelegen ist und daß der Kodierer (4) auf seiner magnetisierten Seite (6) 2m magnetische Übergänge zwischen Polen entgegengesetzter Polarität Nord und Süd in Gestalt von Spiralen trägt, wobei der Kurvenverlauf des ersten Übergangs in Polarkoordinaten ($\mu$, $\theta$) durch die Gleichungen:

$$\mu = [R_o{}^2 + a^2\Omega^2]^{\frac{1}{2}}$$

$$\theta = \left(\text{arctg } \frac{a\Omega}{R_o}\right) - \Omega$$

definiert ist und der Kurvenverlauf der übrigen (2m-1) spiraligen Übergänge durch sukzessives Verdrehen um den Winkel π/m dieses ersten Überganges um das Zentrum (O) des Kodierers definiert ist, wobei in den Gleichungen Ω der Drehwinkel des Kodierers um sein Zentrum (O), μ der Modul der Spirale, gemessen ausgehend von dem Zentrum (O) des Kodierers (4), θ das Argument der Spirale, gemessen ausgehend von dem Zentrum (O), dessen Ursprung die Achse (Oz) ist, welche den Zwischenachsabstand ($R_0$) überbrückt, und a ein Exzentrizitäts-Parameter der Spirale definiert durch die Beziehung:

$$a = d*m*1/\Gamma$$

ist, worin $\Gamma$ den Phasenversatzwinkel zwischen den beiden Ausgangssignalen der beiden Sensorelemente (51,52) des Aufnehmers (5), d den Abstand zwischen den Zentren der Sensorelemente des Aufnehmers und m die Anzahl der magnetischen Perioden des Kodierers bezeichnen.

3.  Vorrichtung nach Anspruch 1 oder 2, **dadurch gekennzeichnet, daß** der Abstand ($R_0$) zwischen der Drehachse ($\delta_R$) des Kodierers (4) und der Achse ($\delta_c$) des Aufnehmers (5) Null ist.

4.  Vorrichtung nach einem der Ansprüche 1 bis 3, **dadurch gekennzeichnet, daß** der Phasenversatzwinkel ($\Gamma$) zwischen den beiden von den Sensorelementen (51) und (52) des Aufnehmers (5) abgegebenen Signalen gleich einem ungeraden Vielfachen von π/2 ist, das die Sensorelemente des Aufnehmers in einer Quadrantenlage im Magnetfeld des Kodierers lokalisiert.

5.  Vorrichtung nach einem der Ansprüche 1 bis 3, **dadurch gekennzeichnet, daß** der Phasenversatzwinkel ($\Gamma$) zwischen den beiden von den Sensorelementen (51) und (52) des Aufnehmers (59 abgegebenen Signalen einem Wert kleiner als π/2 entsprechend einem kleinen Wert des Abstandes (d) zwischen den Sensorelementen entspricht und daß der Aufnehmer ein einziges Mittel für die elektronische Orthogonalisierung der von den Sensorelementen abgegebenen Signale aufweist.

6.  Vorrichtung nach einem der Ansprüche 1 bis 3, **dadurch gekennzeichnet, daß** der Innendurchmesser ($\Phi_i$) des Ringkodierers (4) größer als der doppelte Zwischenachsabstand ($R_0$) ist.

7.  Vorrichtung nach einem der Ansprüche 1 bis 6, **dadurch gekennzeichnet, daß** die von dem Ringkodierer getragenen magnetischen Übergänge längs Kreisbögen (14) verlaufen, deren Radien und Mittelpunktslagen dem Krümmungsradius (r) und den Mittelpunktslagen der Krümmung (O') an den Punkten der Spiralen (15) entsprechen, die auf dem mittleren Durchmesser ($\Phi_m$) des magnetischen Ringkodierers (4) liegen.

8.  Vorrichtung nach einem der Ansprüche 1 bis 6, **dadurch gekennzeichnet, daß** die von dem Ringkodierer getragenen magnetischen Übergänge Kreisbögen (4) sind, deren Kurvenverläufe durch ein Verfahren erhalten sind, welches das Mittel der Quadrate der Abstände zwischen dem Kreisbogenverlauf und dem Spiralbogenverlauf (15) jedes Überganges minimiert.

9.  Verfahren nach einem der Ansprüche 1 bis 6, **dadurch gekennzeichnet, daß** die von den Ringkodierem getragenen magnetischen Übergänge (17) linear sind, deren Verläufe den Tangenten (18) an die Punkte der Spiralen entsprechen, welche auf dem mittleren Durchmesser ($\Phi_m$) des magnetischen Ringkodierers liegen.

10. Vorrichtung nach einem der Ansprüche 1 bis 6, **dadurch gekennzeichnet, daß** die von den Ringkodierern getragenen magnetischen Übergänge (17) linear sind, deren Kurvenverläufe durch ein Verfahren erhalten sind, welches das Mittel der Quadrate der Abstände zwischen dem spiralbogenförmigem Verlauf (19) und der Geraden für jeden Übergang minimiert.

11. Vorrichtung nach einem der Ansprüche 1 bis 6, **dadurch gekennzeichnet, daß** die von den magnetischen Ringkodierem getragenen magnetischen Übergänge lineare Sekanten der Spiralen sind, wobei jeder lineare Übergang durch die zwei Extrempunkte ($P_1$ und $P_2$) jedes spiraligen Überganges auf der Oberfläche des Ringkodierers hindurchgeht.

12. Vorrichtung nach einem der Ansprüche 1 bis 3, **dadurch gekennzeichnet, daß** die Achse des Aufnehmers, welche die Zentren der Sensorelemente enthält, in bekannter Position in der Vorrichtung gehalten ist, und zwar unabhängig von dem Haltemittel zwischen dem Aufnehmer und dem festen Unterbau.

**Claims**

1. Device for measuring position and velocity of a rotating shaft, formed by a fixed sensor carrying at least two sensitive elements, using Hall effect or magnetoresistance, producing sine-wave signals of phase-shift $\Gamma$ and mounted with a constant air-gap opposite the magnetised face of an annular multipolar encoder, centred on the shaft and firmly attached for rotation, ***characterised by*** *the fact that* the axis ($\delta_c$) of the sensor (5) carrying the centres of the two sensitive elements (51 and 52) is situated at a distance ($R_o$) from the axis ($\delta_R$) of rotation of the magnetic encoder (4) and by the fact that the encoder (4) carries on its magnetised face (6) 2m magnetic transitions between poles of opposite North and South polarities, in the form of spirals the line of which of the first transition is defined in polar co-ordinates ($\mu$, $\theta$) by the equations:

$$( \qquad \mu = [R_o{}^2 + a^2\Omega^2]^{\frac{1}{2}}$$

$$($$

$$( \qquad \theta = (\text{arctg } \frac{a\Omega}{R_o}) + \Omega$$

$$($$

and the lines of which of the (2m-1) other spiral transitions are obtained by successive rotations of angles $\pi/m$ of this first transition about the centre (O) of the encoder, in which equations $\Omega$ is the angle of rotation of the encoder about its centre (O), $\mu$ is the modulus of the spiral measured from the centre (O) of the encoder (4), ($\theta$) is the argument of the spiral measured from its origin the axis (Oz) carrying the inter-axial distance ($R_o$) and a is a parameter of off-centring of the spiral defined by the relationship:

$$a = d*m*1/\Gamma$$

in which $\Gamma$ represents the angle of phase-shift between the two signals from the two sensitive elements (51 and 52) of the sensor (5), d represents the distance between the centres of the sensitive elements of the sensor and m the number of magnetic periods of the encoder.

2. Device for measuring position and velocity of a rotating shaft, formed by a fixed sensor carrying at least two sensitive elements, using Hall effect or magnetoresistance, producing sine-wave signals of phase-shift $\Gamma$ and mounted with constant air-gap opposite the magnetised face of an annular multipolar encoder, centred on the shaft and firmly attached for rotation, ***characterised by*** *the fact that* the axis ($\delta_c$) of the sensor (5) carrying the centres of the two sensitive elements (51 and 52) is situated at a distance ($R_0$) from the axis ($\delta_R$) of rotation of the magnetic encoder (4) and by the fact that the encoder (4) carries on its magnetic face (6) 2m magnetic transitions between poles of opposite North and South polarities, in the form of spirals the line of which of the first transition is defined in polar co-ordinates ($\mu$, $\theta$) by the equations:

$$( \qquad \mu = [R_o{}^2 + a^2\Omega]^{\frac{1}{2}}$$

$$($$

$$( \qquad \theta = (\text{arctg } \frac{a\Omega}{R_o}) - \Omega$$

$$($$

and the line of which of the (2m-1) other transitions by successive rotations of angle ($\pi/m$) of this first transition about the centre of the encoder, in which equations $\Omega$ is the angle of rotation of the encoder about its centre (O), $\mu$ the modulus of the spiral measured from the centre (O) of the encoder, $\theta$ the argument of the spiral measured at the centre (O) the origin of which is the axis (Oz) carrying the inter-axial distance ($R_o$) and a a parameter of off-centring of the spiral defined by the relationship:

$$a=d*m*1/\Gamma$$

in which $\Gamma$ represents the angle of phase-shift between the two sensitive elements of the sensor, d represents the distance between the centres of the sensitive elements of the sensor and m the number of magnetic periods of the encoder.

3. Measurement device as described in one of claims 1 or 2, ***characterised by*** *the fact* that the distance ($R_o$) between the axis ($\delta_R$) of rotation of the encoder (4) and the axis ($\delta_c$) of the sensor (5) is zero.

4. Measurement device as described in one of claims 1, 2, or 3, ***characterised by*** *the fact that* the angle of phase-shift ($\Gamma$) between the two signals from the two sensitive elements (51) and (52) of the sensor (5) has a value equal to an odd number of times $\pi/2$, locating the sensitive elements of the sensor in a quadrature situation in the magnetic field of the encoder.

5. Measurement device as described in one of claims 1, 2, or 3, ***characterised by*** *the fact that* the angle ($\Gamma$) of phase-shift between the two signals from the sensitive elements (51) and (52) of the sensor (5) has a value less than $\pi/2$ corresponding to a low value of the distance (d) between the sensitive elements, and by the fact that the sensor carries a single means for electronic orthogonalisation of the signals from the said sensitive elements.

6. Measurement device as described in one of claims 1, 2, or 3, ***characterised by*** *the fact that* the internal diameter ($\Phi_i$) of the annular encoder (4) is greater than twice the inter-axial distance ($R_o$).

7. Measurement device as described in claims 1 to 6, ***characterised by*** *the fact that* the magnetic transitions carried by the annular encoder are arcs of circles (14), the radii and the positions of the centres of which correspond to the radius of curvature (r) and to the positions of the centres of curvature (O') of the points on the spirals (15) situated at the mean diameter ($\Phi_m$) of the annular magnetic encoder (4).

8. Measurement device as described in claims 1 to 6, ***characterised by*** *the fact that* the magnetic transitions carried by the annular encoder are arcs of circles (14), the lines of which are obtained by a method minimising the mean of the quadratic distances between the arc of circle line and the arc of spiral line (15) for each of the transitions.

9. Measurement device as described in claims 1 to 6, ***characterised by*** *the fact that* the magnetic transitions carried by annular encoders are linear (17), the lines of which correspond to the tangents (18) to the points on the spirals situated at the mean diameter ($\Phi_m$) of the annular magnetic encoder.

10. Measurement device as described in claims 1 to 6, ***characterised by*** *the fact that* the magnetic transitions carried by the annular encoders are linear (17), the lines of which are obtained by a method minimising the mean of the quadratic distances between the arc of spiral line (19) and the straight line for each of the transitions.

11. Measurement device as described in claims 1 to 6, ***characterised by*** *the fact that* the magnetic transitions carried by the annular magnetic encoders are linear secant to the spirals, each linear transition passing through the two end points ($P_1$ and $P_2$) of each spiral transition of the surface of the annular encoder.

12. Device for measurement of velocity or position as described in one of claims 1, 2, or 3, ***characterised by*** *the fact that* the axis of the sensor carrying the centre of the sensitive elements is maintained in a known position in the device, whatever the means of connection between the sensor and the fixed frame.

$$(2n+1)\frac{\pi}{2m}$$

$$d$$

22

21

3

2

$C_L$

1

N

S

N

S

N

N

S

R

S

N

S

N

S

N

N

S

N

S

N

S

$$\frac{\pi}{m}$$

FIG_1

FIG_2

FIG_3a

FIG_3b

FIG_4

FIG_5

FIG_6

FIG_7

FIG_8

FIG_9

FIG_10

EP 0 927 872 B1

FIG_11

25